# EUROPÄISCHE PATENTANMELDUNG

(11) **EP 3 561 947 A1**
(43) Veröffentlichungstag der Anmeldung: **30.10.2019**
(21) Anmeldenummer: 18169182.5
(22) Anmeldetag: 25.04.2018
(51) Int. Cl.: H01P 1/17, G02B 6/27, H01P 3/10, H01P 3/12, H01P 3/16

(54) **POLARISATOR FÜR EINEN WELLENLEITER UND SYSTEM ZUR ÜBERTRAGUNG VON HOCHFREQUENTEN ELEKTROMAGNETISCHEN SIGNALEN**

(71) Anmelder: Rosenberger Hochfrequenztechnik GmbH & Co. KG, 83413 Fridolfing (DE)
(72) Erfinder: Klapfenberger, Raimund, 83349 Palling (DE)
(74) Vertreter: Lorenz, Markus

(57) **Zusammenfassung**

Die Erfindung betrifft einen Polarisator (1) für einen Wellenleiter (2), mit einem Grundkörper (3) zur Übertragung einer elektromagnetischen Welle (4), wobei ein erstes Verzögerungsglied (5) in dem Grundkörper (3) vorgesehen ist. Es ist ein dem ersten Verzögerungsglied (5) in Ausbreitungsrichtung (A) der elektromagnetischen Welle (4) nachgeordnetes zweites Verzögerungsglied (6) in dem Grundkörper (3) vorgesehen, wobei die Polarisationsachse (P₂) des zweiten Verzögerungsglieds (6) zu der Polarisationsachse (P₁) des ersten Verzögerungsglieds (5) um einen Verzögerungswinkel (β) gedreht ist.

## Beschreibung

Die Erfindung betrifft einen Polarisator für einen Wellenleiter, mit einem Grundkörper zur Übertragung einer elektromagnetischen Welle, nach dem Oberbegriff von Anspruch 1.

Die Erfindung betrifft auch einen Wellenleiter zur Übertragung einer elektromagnetischen Welle.

Die Erfindung betrifft außerdem ein System zur Übertragung von hochfrequenten elektromagnetischen Signalen, umfassend eine erste Antennenanordnung zur Einspeisung der elektromagnetischen Welle in einen Grundkörper eines ersten Polarisators gemäß dem Oberbegriff des Anspruchs 11 sowie ein System zum Empfang von hochfrequenten elektromagnetischen Signalen, umfassend eine zweite Antennenanordnung zum Empfang der elektromagnetischen Welle an einem Grundkörper eines zweiten Polarisators gemäß dem Oberbegriff des Anspruchs 15.

Ein gattungsgemäßer Polarisator und ein gattungsgemäßes System sind in der US 2016/0172732 A1 beschrieben.

Die Signalübertragung über herkömmliche elektrische Leiter, wie beispielsweise Kupferleiter in elektrischen Kabeln, unterliegt bei hohen Frequenzen bekanntermaßen einer starken Signaldämpfung. Somit muss, insbesondere wenn hohe Anforderungen an die Übertragungsbandbreite gestellt werden, mitunter ein hoher Aufwand betrieben werden, um die Spezifikationen zu erreichen - falls überhaupt möglich. Dies gilt besonders dann, wenn große Übertragungsdistanzen überwunden werden sollen und nur eine geringe Anzahl an Datenkanälen bzw. Übertragungsleitungen zur Verfügung steht.

Eine Alternative zur elektrischen Signalübertragung kann eine funkbasierte Übertragung sein, d. h. eine Übertragung durch elektromagnetische Wellen. Wenn sich elektromagnetische Wellen im Raum allerdings in alle Richtungen ausbreiten, geht deren Signalleistung quadratisch mit der Distanz verloren. In einem Wellenleiter hingegen können elektromagnetische Signale idealerweise entlang nur einer Dimension verlustarm über weite Distanzen übertragen werden.

Unter einem Wellenleiter wird vorliegend eine beliebige, insbesondere lineare Struktur verstanden, die elektromagnetische Wellen zwischen ihren Endpunkten zu führen vermag. Wellenleiter für elektromagnetische Wellen sind in der Elektrotechnik, insbesondere in der Nachrichtentechnik bzw. Hochfrequenztechnik, bereits ausreichend bekannt.

Über einen Wellenleiter können elektromagnetische Signale mit verhältnismäßig geringem Aufwand über weite Strecken vergleichsweise verlustarm übertragen werden. Demnach können Wellenleiter vorteilhaft dort eingesetzt werden, wo hohe Anforderungen an die Übertragungsbandbreite und/oder Übertragungsdistanz einer kabelgebundenen Kommunikation gestellt werden.

Obwohl die Signalübertragung über einen Wellenleiter grundsätzlich vorteilhaft ist, hat es sich in der Praxis gezeigt, dass an der Verbindungsstelle, an der das elektromagnetische Signal von einer Antennenanordnung in den Wellenleiter einkoppelt oder von einer Antennenanordnung empfangen wird, mitunter große Signalverluste auftreten, wenn der Wellenleiter und die Antennenanordnungen zum Einspeisen und Empfangen der elektromagnetischen Welle nicht optimal aufeinander ausgerichtet sind. Dies gilt insbesondere für dielektrische Wellenleiter und die Übertragung einer linear polarisierten elektromagnetischen Welle.

In der Praxis hat sich gezeigt, dass selbst bei äußerst gewissenhafter Montage ein Signalverlust aufgrund nicht ausreichend genau ausgerichteter Polarisationsachsen der im System beteiligten Komponenten auftreten kann, unter anderem auch durch mechanische Belastung - insbesondere Torsionsbelastung - der Komponenten während des Betriebs.

Eine Möglichkeit das Problem zu umgehen wird beispielsweise in der gattungsgemäßen US 2016/0172732 A1 beschrieben. Die US 2016/0172732 A1 betrifft Zirkularpolarisatoren und deren Anwendung für Wellenleiter, wobei eine zunächst linear polarisierte elektromagnetische Welle für die weitere Übertragung durch den Wellenleiter durch den Zirkularpolarisator zirkular polarisiert wird.

Es hat sich allerdings gezeigt, dass die erreichbare Signalbandbreite bei dem in der US 2016/0172732 A1 beschriebenen System für viele Anwendungsfälle zu begrenzt ist.

Der vorliegenden Erfindung liegt die Aufgabe zugrunde, einen verbesserten Polarisator für einen Wellenleiter bereitzustellen, mit dem sich insbesondere eine große Bandbreite bei geringen Kopplungsverlusten erreichen lässt.

Der vorliegenden Erfindung liegt auch die Aufgabe zugrunde, einen verbesserten Wellenleiter bereitzustellen, durch den elektromagnetische Wellen verlustarm und mit hoher Bandbreite übertragbar sind.

Der Erfindung liegt außerdem die Aufgabe zugrunde, ein verbessertes System zur Übertragung von hochfrequenten elektromagnetischen Signalen mit hoher Bandbreite bereitzustellen, das einen Wellenleiter zur verlustarmen Übertragung einer elektromagnetischen Welle umfasst.

Ferner liegt der Erfindung die Aufgabe zugrunde, ein verbessertes System zum Empfang von hochfrequenten elektromagnetischen Signalen mit hoher Bandbreite bereitzustellen, das einen Wellenleiter zur verlustarmen Übertragung einer elektromagnetischen Welle umfasst.

Die Aufgabe wird für den Polarisator durch die in Anspruch 1 aufgeführten Merkmale gelöst. Hinsichtlich des Wellenleiters wird die Aufgabe durch die Merkmale des Anspruchs 10, bezüglich des Systems zur Übertragung durch die Merkmale des Anspruchs 11 und bezüglich des Systems zum Empfang durch die Merkmale des Anspruchs 15 gelöst.

Die abhängigen Ansprüche und die nachfolgend beschriebenen Merkmale betreffen vorteilhafte Ausführungsformen und Varianten der Erfindung.

Die Erfindung betrifft einen Polarisator für einen Wellenleiter mit einem Grundkörper zur Übertragung einer elektromagnetischen Welle, wobei ein erstes Verzögerungsglied in dem Grundkörper vorgesehen ist.

Erfindungsgemäß ist ein dem ersten Verzögerungsglied in Ausbreitungsrichtung der elektromagnetischen Welle nachgeordnetes zweites Verzögerungsglied in dem Grundkörper vorgesehen, wobei die Polarisationsachse des zweiten Verzögerungsglieds zu der Polarisationsachse des ersten Verzögerungsglieds um einen Verzögerungswinkel gedreht ist.

Der Polarisator dient insbesondere dazu, eine eingespeiste, linear polarisierte elektromagnetische Welle vor der Übertragung durch den Wellenleiter in ihrer Polarisationsart zu beeinflussen, insbesondere um aus einer linearen Polarisation eine rotierende Polarisation, d. h. eine zirkulare oder elliptische Polarisation, zu erzeugen. Der Polarisator kann außerdem auch dazu dienen, eine zu empfangende elektromagnetische Welle mit rotierender (zirkularer oder elliptischer) Polarisation vor dem Empfang in ihrer Polarisationsart zu beeinflussen, insbesondere um eine lineare Polarisation zu erzeugen.

Vorzugsweise ist eine Umwandlung zwischen einer linearen und einer zirkularen Polarisation vorgesehen, da es sich bei einer elliptischen Polarisation um eine Mischform einer linearen und einer zirkularen Polarisation handelt, weshalb die erfindungsgemäßen Vorteile bei einer zirkularen Polarisation besonders zum Tragen kommen.

Im Gegensatz zum Stand der Technik, bei dem ein einzelnes Verzögerungsglied, beispielsweise eine um 45° zur Polarisationsachse der einfallenden elektromagnetischen Welle gedrehte sog. Verzögerungsplatte verwendet wird, ist es ein besonderer Vorteil der vorliegenden Erfindung, dass die Beeinflussung der Polarisation der elektromagnetischen Welle unter Verwendung von seriell bzw. hintereinander angeordneten Verzögerungsglieder erfolgt, wobei vorzugsweise ein erstes Verzögerungsglied zunächst nur eine geringe Drehung der Polarisation und ein zweites Verzögerungsglied anschließend die restliche Drehung verursacht, um den Übergang zwischen linearer und insbesondere zirkularer Polarisation der elektromagnetischen Welle zu bewirken.

Erfindungsgemäß kann die Anpassung und somit insbesondere die Bandbreite eines übertragenen elektromagnetischen Signals verglichen mit dem Stand der Technik verbessert sein. Beispielsweise kann die elektromagnetische Welle eine Mittenfrequenz von 40 GHz bis 150 GHz, vorzugsweise 125 GHz, aufweisen. Tatsächlich ist der mögliche Frequenzbereich aber nur durch die mechanische Fertigbarkeit des Polarisators beschränkt und ansonsten erfindungsgemäß nach oben nicht limitiert. Erfindungsgemäß kann somit eine schnellere Datenübertragung bereitgestellt werden.

Es können auch weitere, in Ausbreitungsrichtung der elektromagnetischen Welle hintereinander angeordnete Verzögerungsglieder in dem Grundkörper vorgesehen sein, beispielsweise ein drittes Verzögerungsglied, ein viertes Verzögerungsglied, ein fünftes Verzögerungsglied, ein sechstes Verzögerungsglied oder noch mehr Verzögerungsglieder, die die erforderliche Gesamtdrehung der Polarisation unter sich aufteilen. Grundsätzlich ist die Erfindung somit nicht auf die Verwendung von zwei Verzögerungsgliedern beschränkt zu verstehen, wobei sich die Erfindung jedoch ganz besonders zur Verwendung mit zwei Verzögerungsgliedern pro Polarisator eignet. Zum besseren Verständnis wird die Erfindung nachfolgend im Wesentlichen im Hinblick auf ein erstes Verzögerungsglied und ein dem ersten Verzögerungsglied nachgeordnetes zweites Verzögerungsglied beschrieben.

Vorzugsweise sind die Verzögerungsglieder entlang der Ausbreitungsrichtung der elektromagnetischen Welle voneinander beabstandet, wobei der Abstand zwischen den Verzögerungsgliedern beliebig sein kann.

Die Drehrichtung bzw. der Drehsinn der zirkularen Polarisation (rechtszirkular oder linkszirkular) kann in Abhängigkeit des Vorzeichens der Verzögerungswinkel der Verzögerungsglieder einstellbar sein. Die Drehrichtung der zirkularen Polarisation kann auch durch die Ausrichtung bzw. Anregung der linearen Polarisation bestimmt werden. Eine Drehung um 90° der linearen Polarisation kann dabei zu einem Wechsel zwischen rechts- oder linkszirkularer Polarisation führen.

Bei dem Grundkörper kann es sich um ein im Wesentlichen längliches Bauteil handeln, dessen Längsachse in Ausbreitungsrichtung der elektromagnetischen Welle ausgerichtet ist.

Der Grundkörper kann einteilig oder mehrteilig ausgebildet sein, vorzugsweise ist der Grundkörper einteilig als Spritzgussteil ausgebildet.

In einer Weiterbildung der Erfindung kann vorgesehen sein, dass der Grundkörper einen im Wesentlichen runden Querschnitt aufweist.

Ein runder Querschnitt kann sich zur Übertragung der elektromagnetischen Welle, insbesondere im Hinblick auf die Übertragung einer zirkular polarisierten elektromagnetischen Welle, besonders gut eignen. Die Erfindung kann sich grundsätzlich aber auch für einen Grundkörper mit elliptischem, rechteckigem oder sonstigem Querschnitt eignen.

Insbesondere durch die Verwendung eines Grundkörpers mit im wesentlichen rundem Querschnitt sowie die Übertragung einer zirkular polarisierten elektromagnetischen Welle durch diesen Grundkörper kann die Signalübertragung praktisch unabhängig von Torsion oder sonstiger mechanischer Belastung sowie Ausrichtungsfehlern und somit ohne nennenswerten Leistungsverlust stattfinden.

In einer Weiterbildung kann ferner vorgesehen sein, dass der Grundkörper als dielektrischer Wellenleiter, Hohlleiter oder Eindraht-Wellenleiter ausgebildet ist. Dies gilt auch für den Wellenleiter, mit dem der Polarisator verwendet werden soll.

Es kann vorgesehen sein, dass der Polarisator und der Wellenleiter einteilig ausgebildet sind. Der Polarisator und der Wellenleiter können allerdings auch mehrteilig ausgebildet sein, wobei der Polarisator die elektromagnetische Welle über sein ausgangsseitiges Ende in ein eingangsseitiges Ende des Wellenleiters möglichst verlustarm einkoppelt oder wobei der Wellenleiter die elektromagnetische Welle über sein ausgangsseitiges Ende in ein eingangsseitiges Ende des Polarisators möglichst verlustarm einkoppelt.

In einer Weiterbildung der Erfindung kann vorgesehen sein, dass das erste Verzögerungsglied und/oder das zweite Verzögerungsglied einen von dem Querschnitt des Grundkörpers verschiedenen, vorzugsweise geringeren Querschnitt aufweist bzw. aufweisen.

Die Ausbildung eines Verzögerungsglieds durch eine Querschnittsänderung kann die Polarisation einer das Verzögerungsglied durchlaufenden elektromagnetischen Welle beispielsweise durch Doppelbrechung(en) und/oder Reflexion(en) vorteilhaft beeinflussen.

Wenn im Rahmen der Erfindung auf das erste und/oder das zweite Verzögerungsglied Bezug genommen wird, schließt dies grundsätzlich optional mit ein, dass auch noch weitere Verzögerungsglieder, beispielsweise ein drittes, viertes, fünftes und/oder sechstes Verzögerungsglied, vorhanden und analog ausgestaltet sein können.

In einer bevorzugten Weiterbildung der Erfindung kann vorgesehen sein, dass das erste Verzögerungsglied und/oder das zweite Verzögerungsglied einteilig mit dem Grundkörper ausgebildet ist bzw. sind.

Insbesondere, aber nicht ausschließlich im Falle der Ausbildung der Verzögerungsglieder durch eine Querschnittsänderung des Grundkörpers kann es von Vorteil sein, das oder die Verzögerungsglieder einteilig mit dem Grundkörper auszubilden. Die Verzögerungsglieder und der Grundkörper können allerdings auch mehrteilig ausgebildet sein.

In einer Weiterbildung kann außerdem vorgesehen sein, dass das erste Verzögerungsglied und/oder das zweite Verzögerungsglied durch jeweils wenigstens eine Ausnehmung, vorzugsweise eine Abflachung, in dem Grundkörper ausgebildet ist bzw. sind.

Insbesondere wenn ein Grundkörper mit im Wesentlichen runden Querschnitt vorgesehen ist, können sich bereichsweise Abflachungen besonders gut eignen, um entsprechende Querschnittsverringerungen in den Grundkörper einzubringen.

Alternativ oder zusätzlich zu Abflachungen können auch Einkerbungen und/oder Verjüngungen vorgesehen sein.

Die Verzögerungsglieder können beispielsweise durch Verjüngungen in einem Rundhohlleiter und/oder durch Verjüngungen bzw. Ausnehmungen in einem Dielektrikum, welches ggf. auch in einem Rundhohlleiter eingebracht sein kann, erzeugt werden.

Es kann auch vorgesehen sein, dass eine Ausnehmung in einem dielektrischen Grundkörper mit einem weiteren Dielektrikum ausgefüllt wird, dessen Permittivität sich von der des Grundkörpers unterscheidet.

An dieser Stelle sei darauf hingewiesen, dass die Verzögerungsglieder in jeder Hinsicht unterschiedlich ausgebildet sein können. Beispielsweise kann das erste Verzögerungsglied einteilig mit dem Grundkörper ausgebildet sein und das zweite Verzögerungsglied als Zwischenstück ausgebildet sein - oder umgekehrt. Auch die Varianten der Querschnittsänderungen (Ausnehmung/Abflachung/Einkerbung/Verjüngung etc.) können sich zwischen den Verzögerungsgliedern unterscheiden. Vorzugsweise werden allerdings Verzögerungsglieder gleichen Typs, jedoch mit verschiedenen Ausrichtungen und geometrischen Abmessungen, innerhalb eines Polarisators eingesetzt, wodurch sich die Herstellung vereinfachen kann.

Es kann eine beliebige Anzahl Ausnehmungen pro Verzögerungsglied vorgesehen sein, die insbesondere entlang des Umfangs des Grundkörpers verteilt angeordnet sind, beispielsweise zwei Ausnehmungen, drei Ausnehmungen, vier Ausnehmungen oder noch mehr Ausnehmungen. Auch die Verwendung nur einer einzigen Ausnehmung pro Verzögerungsglied kann im Rahmen der Erfindung möglich sein.

In einer Weiterbildung kann insbesondere vorgesehen sein, dass das erste Verzögerungsglied und/oder das zweite Verzögerungsglied durch jeweils zwei entlang des Umfangs des Grundkörpers gegenüberliegende Ausnehmungen ausgebildet ist bzw. sind, wobei die beiden gegenüberliegenden Ausnehmungen orthogonal zu der Polarisationsachse des Verzögerungsglieds ausgebildet sind.

Es kann grundsätzlich vorgesehen sein, dass bei Verwendung mehrerer entlang des Umfangs des Grundkörpers verteilten Ausnehmungen pro Verzögerungsglied die jeweiligen Ausnehmungen symmetrisch zu der Polarisationsachse des jeweiligen Verzögerungsglieds ausgerichtet sind. Die symmetrische Anordnung kann also auch bei der Verwendung von mehr als zwei Ausnehmungen pro Verzögerungsglied von Vorteil sein.

In einer vorteilhaften Weiterbildung der Erfindung kann vorgesehen sein, dass die wenigstens eine Ausnehmung entlang der Ausbreitungsrichtung der elektromagnetischen Welle einen ersten Übergangsbereich aufweist, in dem der Querschnitt des Grundkörpers abfällt, gefolgt von einem Mittelbereich, in dem der Querschnitt des Grundkörpers konstant ist, gefolgt von einem zweiten Übergangsbereich, in dem der Querschnitt des Grundkörpers ansteigt.

Die Verwendung von Übergangsbereichen kann die Anpassung des Polarisators und somit die Signalübertragung verbessern. Insbesondere wenn der Grundkörper und/oder der Polarisator als Dielektrikum ausgebildet ist, kann durch die Übergangsbereiche beispielsweise die Rückflussdämpfung ("return loss") verbessert sein. Unter anderem bei Verwendung eines metallischen Grundkörpers und/oder Polarisators kann aber auch auf einen Übergangsbereich verzichtet werden. Der Übergang kann auch scharfkantig ausgebildet sein. Die Verwendung von Übergangsbereichen ist grundsätzlich optional - auch unabhängig von der Beschaffenheit des Grundkörpers bzw. Polarisators.

Die Übergangsbereiche können beispielsweise in der Art von Abschrägungen, Rampen oder Fasen ausgebildet sein. Der Verlauf der Querschnittsänderung in den Übergangsbereichen kann linear sein oder einer beliebigen Kurve folgen, vorzugsweise einer monoton fallenden bzw. steigenden Kurve.

In einer Weiterbildung der Erfindung kann außerdem vorgesehen sein, dass die Länge des ersten Verzögerungsglieds und die Länge des zweiten Verzögerungsglieds in Ausbreitungsrichtung der elektromagnetischen Welle verschieden sind.

Insbesondere kann es von Vorteil sein, die Längen der Verzögerungsglieder in Abhängigkeit des Kippwinkels deren Polarisationsachsen relativ zu der Polarisationsachse der in den Polarisator eintretenden, linear polarisierten elektromagnetischen Welle zu bestimmen. In komplementärer Weise können die Längen der Verzögerungsglieder auch in Abhängigkeit des Kippwinkels deren Polarisationsachsen relativ zu der Polarisationsachse der aus dem Polarisator austretenden, linear polarisierten elektromagnetischen Welle bestimmt werden.

Insbesondere kann vorgesehen sein, dass die Verzögerungsglieder umso länger ausgebildet sind, je geringer die Winkeldifferenz zwischen deren Polarisationsachse und der Polarisationsachse der in den Polarisator eintretenden oder aus dem Polarisator austretenden elektromagnetischen Welle ist, um einen ausreichenden Übertragungsweg in dem Verzögerungsglied zur Drehung der Polarisation der elektromagnetischen Welle bereitzustellen.

Grundsätzlich können Typ, Geometrie und/oder Ausrichtung der Verzögerungsglieder durch Simulationen und/oder Versuchsreihen bestimmt werden.

Es kann vorgesehen sein, dass der Polarisator eine Metallhülse aufweist, die den Grundkörper zumindest im Bereich der Verzögerungsglieder, vorzugsweise vollständig, in sich aufnimmt. Der Grundkörper kann auch aus einer Metallhülse bestehen.

Insbesondere kann auch vorgesehen sein, dass ein im Wesentlichen dielektrischer Grundkörper in einen umgebenen Metallzylinder einschiebbar ist. Das Metallgehäuse bzw. der Metallzylinder kann den Querschnittsänderungen des Grundkörpers zur Ausbildung der Verzögerungsglieder, insbesondere den Ausnehmungen in dem Grundkörper, folgen oder diese alternativ auch nur einhüllen, um einen Luftspalt oder die Möglichkeit des Einsatzes eines zusätzlichen Dielektrikums in die Ausnehmungen zu ermöglichen.

Die Erfindung betrifft auch einen Wellenleiter zur Übertragung einer elektromagnetischen Welle, umfassend wenigstens einen Polarisator gemäß den vorstehenden Ausführungen.

Vorzugsweise kann der Wellenleiter zwei Polarisatoren gemäß den vorstehenden Ausführungen aufweisen, wobei ein erster Polarisator an einem ersten Ende des Wellenleiters angeordnet und ausgebildet ist, die Polarisationsart einer in den ersten Polarisator eingespeisten elektromagnetischen Welle von einer linearen Polarisation in eine zirkulare oder elliptische Polarisation zur anschließenden Übertragung durch den Wellenleiter zu wandeln, und wobei der zweite Polarisator an einem zweiten Ende des Wellenleiters angeordnet und ausgebildet ist, die Polarisationsart der durch den Wellenleiter übertragenen elektromagnetischen Welle in eine lineare Polarisation zu wandeln.

Der Wellenleiter kann einteilig oder mehrteilig mit dem ersten und/oder dem zweiten Polarisator ausgebildet sein.

Die Erfindung betrifft außerdem ein System zur Übertragung von hochfrequenten elektromagnetischen Signalen, umfassend einen Wellenleiter zur Übertragung einer elektromagnetischen Welle und eine erste Antennenanordnung zur Einspeisung der elektromagnetischen Welle in einen Grundkörper eines ersten Polarisators. Der erste Polarisator ist angeordnet und ausgebildet, die eingespeiste elektromagnetische Welle von einer linearen Polarisation in eine zirkulare Polarisation zu überführen, wobei ein erstes Verzögerungsglied in dem Grundkörper des ersten Polarisators vorgesehen ist, dessen Polarisationsachse zu der Polarisationsachse des von der ersten Antennenanordnung in den Grundkörper des ersten Polarisators eingespeisten elektromagnetischen Welle um einen Verzögerungswinkel gedreht ist. Das erfindungsgemäße System sieht außerdem ein dem ersten Verzögerungsglied in Ausbreitungsrichtung der elektromagnetischen Welle nachgeordnetes zweites Verzögerungsglied in den Grundkörper vor, wobei die Polarisationsachse des zweiten Verzögerungsglieds zu der Polarisationsachse des ersten Verzögerungsglieds um einen Verzögerungswinkel gedreht ist.

Der erste Polarisator ist vorzugsweise zwischen der ersten Antennenanordnung und dem Wellenleiter angeordnet, kann jedoch auch in dem Wellenleiter integriert sein.

In vorteilhafter Weise kann der Polarisator also zur Änderung der Polarisationsart der eingespeisten elektromagnetischen Welle von einer linearen in eine zirkulare Polarisation (oder umgekehrt) verwendbar sein.

Dadurch, dass erfindungsgemäß die erste (oder die nachfolgend beschriebene zweite) Antennenanordnung nicht unbedingt ausgebildet sein muss, direkt eine zirkular polarisierte elektromagnetische Welle auszusenden oder zu empfangen, kann eine vergrößerte Bandbreite zur Signalübertragung bereitgestellt werden, da die bekannten Antennenanordnung zur Übertragung und zum Empfang einer zirkular polarisierten elektromagnetischen Welle üblicherweise eine vergleichsweise beschränkte Bandbreite aufweisen. Die Verwendung von linearen polarisierten Antennenanordnungen in Kombination mit den erfindungsgemäßen Polarisatoren zur Umwandlung der Polarisationsart kann somit von Vorteil sein.

Erfindungsgemäß kann durch Verwendung der zumindest zwei Verzögerungsglieder pro Polarisator eine nahezu ideale zirkulare Polarisation durch gleichmäßige Aufteilung der x- und y-Komponente der elektromagnetischen Schwingung erzeugt werden.

In einer Weiterbildung umfasst das System auch eine zweite Antennenanordnung und einen zweiten Polarisator, wobei die zweite Antennenanordnung zum Empfang der elektromagnetischen Welle an einem Grundkörper des zweiten Polarisators vorgesehen ist, wobei der zweite Polarisator dem ersten Polarisator in Ausbreitungsrichtung der elektromagnetischen Welle nachgeordnet und ausgebildet ist, die durch den Wellenleiter übertragene elektromagnetische Welle von der zirkularen Polarisation in eine lineare Polarisation zu überführen. Dabei ist ein drittes Verzögerungsglied in dem Grundkörper des zweiten Polarisators vorgesehen, dessen Polarisationsachse zu der Polarisationsachse des ersten Verzögerungsglieds des ersten Polarisators um 90° gedreht ist, und wobei ein dem dritten Verzögerungsglied in Ausbreitungsrichtung der elektromagnetischen Welle vorgeordnetes viertes Verzögerungsglied in dem Grundkörper des zweiten Polarisators vorgesehen ist, dessen Polarisationsachse zu der Polarisationsachse des zweiten Verzögerungsglieds des ersten Polarisators um 90° gedreht ist.

Der zweite Polarisator ist vorzugsweise zwischen dem Wellenleiter und der zweiten Antennenanordnung angeordnet, kann jedoch auch in den Wellenleiter integriert sein.

Durch das erfindungsgemäße System wird eine Lösung bereitgestellt, die eine vorteilhafte Übertragung einer zirkular polarisierten elektromagnetischen Welle durch einen Wellenleiter ermöglicht. Aufgrund der eingangs- und ausgangsseitigen Änderung der Polarisationsart der elektromagnetischen Welle durch die Polarisatoren können in vorteilhafter Weise Antennenanordnungen zum Senden bzw. Empfangen von linear polarisierten elektromagnetischen Welle verwendbar sein, wodurch die Bandbreite der mittels des Systems übertragbaren elektromagnetischen Signale verbessert sein kann, insbesondere im Hinblick auf die ansonsten notwendige Verwendung von Antennenanordnungen zum Senden bzw. Empfangen von zirkular polarisierten elektromagnetischen Wellen.

In vorteilhafter Weise ist es aufgrund der zirkularen Polarisation außerdem nicht mehr unbedingt erforderlich, dass die Antennenanordnungen zum Senden und zum Empfangen der elektromagnetischen Welle in gleicher Lage zueinander ausgerichtet sind.

In einer Weiterbildung kann vorgesehen sein, dass die Länge des ersten Verzögerungsglieds und des zweiten Verzögerungsglieds in Ausbreitungsrichtung der elektromagnetischen Welle in Abhängigkeit von dem Verzögerungswinkel des jeweiligen Verzögerungsglieds bestimmt ist, wobei die Länge der Verzögerungsglieder mit steigendem Verzögerungswinkel abnimmt, vorzugsweise umgekehrt proportional zu dem Verzögerungswinkel bestimmt ist.

Zur Auslegung des Systems kann insbesondere berücksichtigt werden, dass eine initiale, geringe Drehung der Polarisation der elektromagnetischen Welle mittels eines ersten Verzögerungsglieds mit nur einem kleinen Verzögerungswinkels ein vergleichsweise langes erstes Verzögerungsglied und schließlich auch einen entsprechend lang ausgebildeten Polarisator erfordern kann. Auf der anderen Seite können Verluste in der Signalübertragung auf diese Weise reduziert werden. Eine geeignete Abstimmung des Systems auf die jeweilige Anwendung und Rahmenbedingungen kann der Fachmann gegebenenfalls vornehmen.

In einer Weiterbildung kann vorgesehen sein, dass die Summe aus dem Verzögerungswinkel des ersten Verzögerungsglieds und dem Verzögerungswinkel des zweiten Verzögerungsglieds einen Gesamtverzögerungswinkel von 90° ergibt, wobei der Verzögerungswinkel des ersten Verzögerungsglieds 1 °bis 45°, vorzugsweise 5° bis 25°, besonders bevorzugt 15° und der Verzögerungswinkel des zweiten Verzögerungsglieds 1 °bis 89°, vorzugsweise 65° bis 85°, besonders bevorzugt 75° beträgt.

Der Verzögerungswinkel des zweiten Verzögerungsglieds kann in relativer Betrachtung zu der Polarisationsachse der in das erste Verzögerungsglied eintretenden elektromagnetischen Welle vorzugsweise größer sein als 45°.

Die vorstehenden Ausführungen können vorzugsweise analog auch für das dritte und vierte Verzögerungsglied gelten.

Die Erfindung betrifft auch ein System zum Empfang von hochfrequenten elektromagnetischen Signalen, umfassend einen Wellenleiter zur Übertragung einer elektromagnetischen Welle und eine zweite Antennenanordnung zum Empfang der elektromagnetischen Welle an einem Grundkörper eines zweiten Polarisators. Der zweite Polarisator ist ausgebildet, die durch den Wellenleiter übertragene elektromagnetische Welle von einer zirkularen Polarisation in eine lineare Polarisation zu überführen, wobei ein drittes Verzögerungsglied in dem Grundkörper des zweiten Polarisators vorgesehen ist, dessen Polarisationsachse zu der Polarisationsachse der aus dem zweiten Polarisator austretenden linear polarisierten elektromagnetischen Welle um einen Verzögerungswinkel gedreht ist. Das erfindungsgemäße System sieht ein dem dritten Verzögerungsglied in Ausbreitungsrichtung der elektromagnetischen Welle vorgeordnetes viertes Verzögerungsglied in dem Grundkörper des zweiten Polarisators vor, wobei die Polarisationsachse des vierten Verzögerungsglieds zu der Polarisationsachse des dritten Verzögerungsglieds um einen Verzögerungswinkel gedreht ist.

Der zweite Polarisator ist vorzugsweise zwischen dem Wellenleiter und der zweiten Antennenanordnung angeordnet, kann jedoch auch in den Wellenleiter integriert sein.

Schließlich betrifft die Erfindung auch die Verwendung eines vorstehend beschriebenen Polarisators für einen Wellenleiter.

Aus einer linear polarisierten elektromagnetischen Welle, die sich beispielsweise durch einen Rundhohlleiter oder einen dielektrischen Wellenleiter ausbreitet, kann durch zwei oder mehr Verzögerungsglieder, deren Polarisationsachsen zueinander und zur Polarisationsachse der ursprünglichen, linear polarisierten elektromagnetischen Welle gedreht sind, eine zirkulare oder elliptische Polarisation erzeugt werden - oder umgekehrt.

Der erfindungsgemäße Polarisator kann sich insbesondere für Systeme zur Übertragung und zum Empfang hochfrequenter elektromagnetischer Signale für die Automobilindustrie bzw. für Fahrzeuge eignen. Mitunter müssen beispielsweise beim autonomen Betrieb eines Fahrzeugs bzw. bei Verwendung von Assistenzsystemen hohe Datenmengen von mehreren Kameras, diversen Sensoren und Navigationsquellen miteinander kombiniert und transportiert werden, üblicherweise in Echtzeit. Demnach sind die Anforderungen bezüglich der erforderlichen Datenrate mittlerweile sehr hoch.

Grundsätzlich eignet sich die Erfindung allerdings zur Verwendung für beliebige Anwendungen, bei denen es auf die Übertragung einer elektromagnetischen Welle durch einen Wellenleiter ankommt.

Merkmale, die bereits im Zusammenhang mit dem erfindungsgemäßen Polarisator beschrieben wurden, sind selbstständig auch für den erfindungsgemäßen Wellenleiter, die erfindungsgemäßen Systeme und die erfindungsgemäße Verwendung vorteilhaft umsetzbar - und umgekehrt. Ferner können Vorteile, die bereits im Zusammenhang mit dem erfindungsgemäßen Polarisator genannt wurden, auch auf den erfindungsgemäßen Wellenleiter bzw. auf die erfindungsgemäßen Systeme bzw. auf die erfindungsgemäße Verwendung bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erste Ausführungsform eines erfindungsgemäßen Polarisators in isometrischer Darstellung;
- Figur 2: eine zweite Ausführungsform des erfindungsgemäßen Polarisators im Querschnitt;
- Figur 3: den Polarisator der Figur 2 in einer teilgeschnittenen Ansicht entlang der Schnittebene III-III;
- Figur 4: den Polarisator der Figur 2 in einer teilgeschnittenen Ansicht entlang der Schnittebene IV-IV; und
- Figur 5: ein erfindungsgemäßes System zur Übertragung von hochfrequenten elektromagnetischen Signalen mit einer ersten und einer zweiten Antennenanordnung, einem ersten und einem zweiten Polarisator und einem Wellenleiter in isometrischer Darstellung.

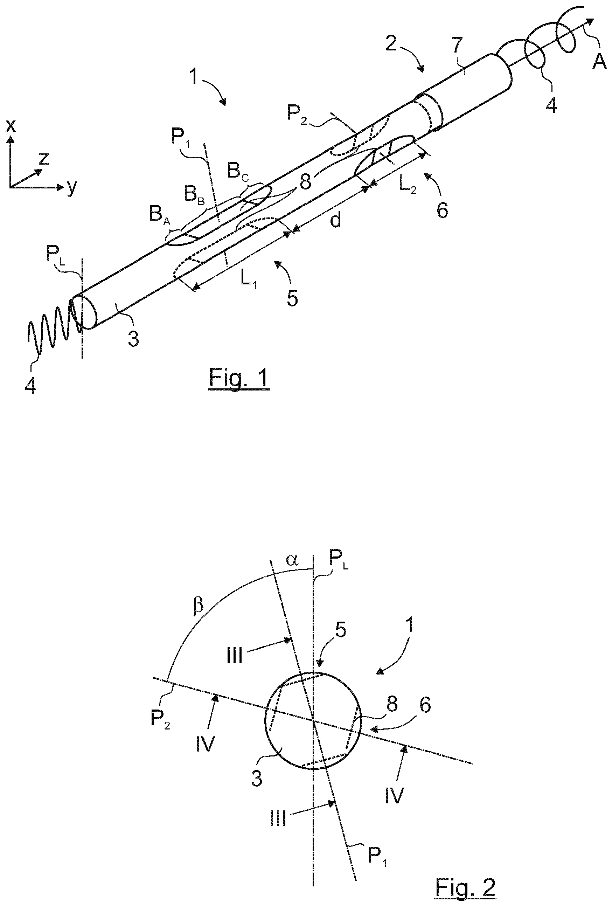

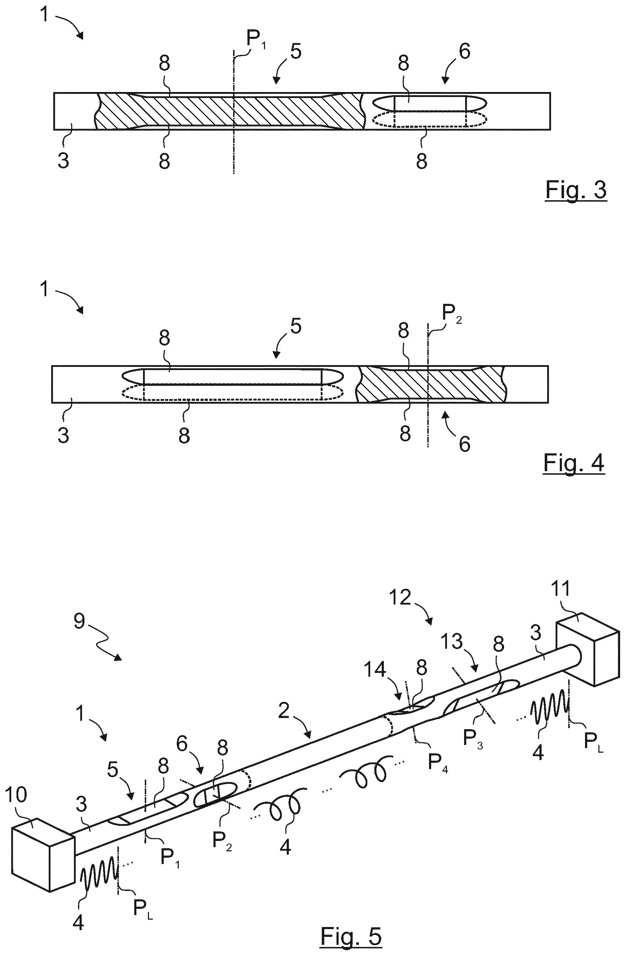

Figur 1 zeigt in isometrischer Darstellung einen Polarisator 1 für einen Wellenleiter 2 mit einem Grundkörper 3 zur Übertragung einer elektromagnetischen Welle 4. Der Polarisator 1 kann einteilig mit dem Wellenleiter 2 oder mehrteilig bzw. als separates Bauteil ausgebildet sein, wie dies in Figur 1 und Figur 5 durch gestrichelte Linien am Übergang zwischen Polarisator 1 und Wellenleiter 2 angedeutet ist.

Es ist ein erstes Verzögerungsglied 5 in dem Grundkörper 3, sowie ein dem ersten Verzögerungsglied 5 in Ausbreitungsrichtung A (bzw. in z-Richtung hinsichtlich des in Figur 1 eingeblendeten karthesischen Koordinatensystems) der elektromagnetischen Welle 4 nachgeordnetes zweites Verzögerungsglied 6 in dem Grundkörper 3 vorgesehen. Die Polarisationsachse P₂ des zweiten Verzögerungsglieds 6 ist zu der Polarisationsachse P₁ des ersten Verzögerungsglieds 5 um einen Verzögerungswinkel β gedreht (vgl. Figur 2).

Wie vorstehend bereits erwähnt können auch mehr als zwei Verzögerungsglieder vorgesehen sein, wobei die Verwendung der vorliegend beschriebenen beiden Verzögerungsglieder 5, 6 besonders bevorzugt ist.

Der Grundkörper 3 weist einen im Wesentlichen runden Querschnitt auf. Grundsätzlich kann der Querschnitt des Grundkörpers 3 allerdings beliebig sein, vorzugsweise entspricht der Querschnitt des Grundkörpers 3 dem Querschnitt des Wellenleiters 2.

Es kann vorgesehen sein, dass der Grundkörper 3 als dielektrischer Wellenleiter, Hohlleiter oder Eindraht-Wellenleiter ausgebildet ist. Im Ausführungsbeispiel ist der Grundkörper 3 als dielektrischer Wellenleiter ausgebildet, der optional von einem Metallzylinder 7 umfasst sein kann, wobei der Metallzylinder 7 zur Veranschaulichung lediglich in Figur 1 und auch nur im Bereich des Wellenleiters 2 angedeutet ist.

Insbesondere kann vorgesehen sein, dass das erste Verzögerungsglied 5 und/oder das zweite Verzögerungsglied 6 einen von dem Querschnitt des Grundkörpers 3 verschiedenen, vorzugsweise geringeren Querschnitt aufweist bzw. aufweisen. Im Ausführungsbeispiel sind die Verzögerungsglieder 5, 6 einteilig mit dem Grundkörper 3 ausgebildet.

Grundsätzlich können die Verzögerungsglieder 5, 6 durch jeweils wenigstens eine Ausnehmung, vorzugsweise eine Abflachung 8, in dem Grundkörper 3 ausgebildet sein. Im Ausführungsbeispiel gemäß den Figuren 1 bis 5 sind die Verzögerungsglieder 5, 6 durch jeweils zwei entlang des Umfangs des Grundkörpers 3 gegenüberliegende Abflachungen 8 ausgebildet, wobei die beiden gegenüberliegenden Abflachungen 8 orthogonal zu der Polarisationsachse P₁, P₂ des jeweiligen Verzögerungsglieds 5, 6 ausgerichtet sind.

Es sei erwähnt, dass grundsätzlich eine beliebige Anzahl Ausnehmungen bzw. Abflachungen 8 pro Verzögerungsglied 5, 6 vorgesehen sein kann.

Im Ausführungsbeispiel ist außerdem vorgesehen, dass die wenigstens eine Ausnehmung bzw. Abflachung 8 entlang der Ausbreitungsrichtung A der elektromagnetischen Welle 4 einen ersten Übergangsbereich B_{A} aufweist, in dem der Querschnitt des Grundkörpers 3 abfällt, gefolgt von einem Mittelbereich B_{B}, in dem der Querschnitt des Grundkörpers 3 konstant ist, gefolgt von einem zweiten Übergangsbereich B_{C}, in dem der Querschnitt des Grundkörpers 3 wieder ansteigt. Hierdurch kann ein gleichmäßiger Übergang und somit eine bessere Anpassung des Polarisators 1 an die Querschnittsänderungen ermöglicht werden, insbesondere (aber nicht ausschließlich) bei Verwendung eines dielektrischen Grundkörpers 3. Zur Vereinfachung sind die Bereiche B_{A}, B_{B}, B_{C} lediglich für das erste Verzögerungsglied 5 in Figur 1 gekennzeichnet. Die Verwendung von Übergangsbereichen B_{A}, B_{C} ist optional und kann auch entfallen, insbesondere (aber nicht ausschließlich) bei Verwendung eines metallischen Grundkörpers 3.

Wie in den Ausführungsbeispielen erkennbar, sind die Länge L₁ (vgl. Figur 1) des ersten Verzögerungsglieds 5 und die Länge L₂ des zweiten Verzögerungsglieds 6 in Ausbreitungsrichtung A der elektromagnetischen Welle 4 voneinander verschieden. Grundsätzlich können die Längen L₁, L₂ der Verzögerungsglieder 5, 6 allerdings auch identisch sein, insbesondere wenn sich die nachfolgend noch beschriebenen Verzögerungswinkel α und β entsprechen.

Es kann vorgesehen sein, dass die Verzögerungsglieder 5, 6 voneinander beabstandet sind. Auf den Abstand d (vgl. Figur 1) zwischen den Verzögerungsgliedern 5, 6 kommt es allerdings nicht an.

Wie in Figur 1 schematisch dargestellt ist, kann der Polarisator 1 vorzugsweise verwendet werden, um eine linear polarisierte elektromagnetische Welle 4 in eine zirkular polarisierte elektromagnetische Welle 4 oder zumindest eine elliptisch polarisierte elektromagnetische Welle 4 umzuwandeln, die anschließend durch den Wellenleiter 2 übertragbar ist. Hierzu kann die Polarisationsachse P₁ des ersten Verzögerungsglieds 5 zu der Polarisationsachse P_{L} der eingespeisten elektromagnetischen Welle 4 um einen Verzögerungswinkel α gedreht sein. Durch eine relativ zu der Polarisationsachse P_{L} der eingespeisten elektromagnetischen Welle 4 und der Polarisationsachse P₁ des ersten Verzögerungsglieds 5 weiter gedrehten Polarisationsachse P₂ des zweiten Verzögerungsglieds 6 kann die Polarisationsart der elektromagnetischen Welle 4 schließlich in die zirkulare Polarisation überführt werden.

Die Drehrichtung der erzeugten zirkularen Polarisation ergibt sich im Ausführungsbeispiel rechtzirkular, da die Anregung der linearen Polarisation der einfallenden elektromagnetischen Welle 4 in x-Richtung ausgerichtet ist. Eine um 90° gedrehte lineare Polarisation, d. h. eine Anregung in y-Richtung der einfallenden elektromagnetischen Welle 4 würde bei gleicher Konfiguration des Polarisators 1 hingegen eine linkszirkulare Polarisation zur Folge haben. Die Drehrichtung der zirkularen Polarisation kann also durch die Ausrichtung der linearen Polarisation der einfallenden elektromagnetischen Welle 4 und die Ausrichtung bzw. Anordnung der Verzögerungsglieder 5, 6 bestimmbar sein.

Die Länge L₁ des ersten Verzögerungsglieds 5 bzw. die Länge L₂ des zweiten Verzögerungsglieds 6 kann in Ausbreitungsrichtung A der elektromagnetischen Welle 4 in Abhängigkeit von dem Verzögerungswinkel α bzw. β des jeweiligen Verzögerungsglieds 5, 6 bestimmt sein, wobei die Länge L₁, L₂ der Verzögerungsglieder 5, 6 mit steigendem Verzögerungswinkel α, β abnehmen kann, vorzugsweise umgekehrt proportional zu dem Verzögerungswinkel α, β ist.

Insbesondere kann vorgesehen sein, dass die Summe aus dem Verzögerungswinkel α des ersten Verzögerungsglieds 5 und dem Verzögerungswinkel β des zweiten Verzögerungsglieds 6 einen Gesamtverzögerungswinkel von 90º ergibt, wobei der Verzögerungswinkel α des ersten Verzögerungsglieds 5 1º bis 45º, vorzugsweise 5º bis 25º, besonders bevorzugt 15º (wie im Ausführungsbeispiel dargestellt), und der Verzögerungswinkel β des zweiten Verzögerungsglieds 6 1º bis 89º, vorzugsweise 65º bis 85º, besonders bevorzugt 75º (wie im Ausführungsbeispiel dargestellt), beträgt.

Die Zusammenhänge zwischen den Polarisationsachsen P₁, P₂, P_{L} und den Verzögerungswinkeln α, β sind in Figur 2 weiter verdeutlicht. Figur 2 zeigt hierzu einen Querschnitt eines weiteren Polarisators 1.

Zur weiteren Verdeutlichung zeigt Figur 3 eine teilgeschnittene Seitenansicht des Polarisators 1 der Figur 2 entlang der in Figur 2 dargestellten Schnittebene III-III, dessen Aufbau grundsätzlich dem Aufbau des Polarisators 1 des Ausführungsbeispiels der Figur 1 entspricht, wobei allerdings der Abstand d zwischen dem ersten Verzögerungsglied 5 und dem zweiten Verzögerungsglied 6 abweicht. Auf den Abstand d zwischen den Verzögerungsgliedern 5, 6 kommt es, wie bereits erwähnt, allerdings nicht an.

Figur 4 zeigt einen weiteren Teilschnitt des Polarisators 1 der Figur 2 entlang der in Figur 2 dargestellten Schnittebene IV-IV.

In Figur 5 ist ein System 9 zur Übertragung von hochfrequenten elektromagnetischen Signalen dargestellt, das einen Wellenleiter 2 zur Übertragung einer elektromagnetischen Welle 4 und eine erste Antennenanordnung 10 zur Einspeisung der elektromagnetischen Welle 4 in einen Grundkörper 3 eines ersten Polarisators 1 umfasst. Der erste Polarisator 1 ist zwischen der ersten Antennenanordnung 10, die lediglich schematisch als Blackbox dargestellt ist, und dem Wellenleiter 2 angeordnet und ausgebildet, die eingespeiste elektromagnetische Welle 4 von einer linearen Polarisation in eine zirkulare Polarisation (oder zumindest in eine elliptische Polarisation) zu überführen. Dabei ist ein erstes Verzögerungsglied 5 in dem Grundkörper 3 des ersten Polarisators 1 vorgesehen, dessen Polarisationsachse P₁ zu der Polarisationsachse P_{L} des von der ersten Antennenanordnung 10 in den Grundkörper 3 eingespeisten elektromagnetischen Welle 4 um einen Verzögerungswinkel α gedreht ist, wie bereits in den Figuren 1 und 2 dargestellt. Weiter ist vorgesehen, dass ein zweites Verzögerungsglied 6 dem ersten Verzögerungsglied 5 in Ausbreitungsrichtung A der elektromagnetischen Welle 4 in dem Grundkörper 3 nachgeordnet ist, wobei die Polarisationsachse P₂ des zweiten Verzögerungsglieds 6 zu der Polarisationsachse P₁ des ersten Verzögerungsglieds 5 um einen Verzögerungswinkel β gedreht ist.

Grundsätzlich kann auch ein zu den vorstehenden Ausführungen komplementäres System zum Empfang von hochfrequenten elektromagnetischen Signalen vorgesehen sein, das einen Wellenleiter 2 zur Übertragung einer elektromagnetischen Welle 4 und eine zweite Antennenanordnung 11 (ebenfalls nur schematisch als Blackbox dargestellt) zum Empfang der elektromagnetischen Welle 4 an einem Grundkörper 3 eines zweiten Polarisators 12 aufweist, der zwischen dem Wellenleiter 2 und der zweiten Antennenanordnung 11 angeordnet ist. Der zweite Polarisator 12 ist dazu ausgebildet, die durch den Wellenleiter 2 übertragene elektromagnetische Welle von der zirkularen Polarisation (oder elliptischen Polarisation) in eine lineare Polarisation zu überführen, wobei ein drittes Verzögerungsglied 13 in dem Grundkörper 3 des zweiten Polarisators 12 vorgesehen ist, dessen Polarisationsachse P₃ zu der Polarisationsachse P_{L} der aus dem zweiten Polarisator 12 austretenden linear polarisierten elektromagnetischen Welle 4 um einen Verzögerungswinkel α gedreht ist. Weiter kann vorgesehen sein, dass ein dem dritten Verzögerungsglied 13 in Ausbreitungsrichtung A der elektromagnetischen Welle 4 vorgeordnetes viertes Verzögerungsglied 14 in dem Grundkörper 3 des zweiten Polarisators 12 vorgesehen ist, wobei die Polarisationsachse P₄ des vierten Verzögerungsglieds 14 zu der Polarisationsachse P₃ des dritten Verzögerungsglieds 13 um einen Verzögerungswinkel β gedreht ist.

Das in Figur 5 gezeigte System 9 entspricht einer vorteilhaften Kombination und umfasst die erste Antennenanordnung 10, die zweite Antennenanordnung 11 und die beiden Polarisatoren 1, 12. Dabei ist die Polarisationsachse P₃ des dritten Verzögerungsglieds 13 in dem Grundkörper 3 des zweiten Polarisators 12 zu der Polarisationsachse P₁ des ersten Verzögerungsglieds 5 des ersten Polarisators 1 um 90º gedreht. Ferner ist die Polarisationsachse P₄ des vierten Verzögerungsglieds 14 des zweiten Polarisators 12 zu der Polarisationsachse P₂ des zweiten Verzögerungsglieds 6 des ersten Polarisators 1 ebenfalls um 90º gedreht.

Um eine elektromagnetische Welle 4 unter Verwendung der ersten Antennenanordnung 10 zur Erzeugung einer linear polarisierten elektromagnetischen Welle 4 bis zu der zweiten Antennenanordnung 11 zum Empfang einer linear polarisierten elektromagnetischen Welle 4 in zirkularer Polarisation durch den Wellenleiter 2 zu übertragen, können somit die beiden Polarisatoren 1, 12 verwendbar sein, wobei der erste Polarisator 1 aus der linear polarisierten elektromagnetischen Welle 4 zunächst eine zirkular polarisierte elektromagnetische Welle 4 erzeugt, diese in den Wellenleiter 2 einspeist - oder einteilig mit dem Wellenleiter 2 ausgebildet ist - und wobei der zweite Polarisator 12 zu dem ersten Polarisator 1 entlang der Ausbreitungsrichtung A der elektromagnetischen Welle 4 gespiegelt und um 90º verdreht angeordnet ist und die zirkular polarisierte elektromagnetische Welle 4 aus dem Wellenleiter 2 aufnimmt - oder einteilig mit dem Wellenleiter 2 ausgebildet ist - und in eine linear polarisierte elektromagnetische Welle 4 umwandelt, um von der nachfolgenden zweiten Antennenanordnung 11 empfangen zu werden.

## Patentansprüche

1. Polarisator (1) für einen Wellenleiter (2), mit einem Grundkörper (3) zur Übertragung einer elektromagnetischen Welle (4), wobei ein erstes Verzögerungsglied (5) in dem Grundkörper (3) vorgesehen ist,
**dadurch gekennzeichnet, dass**
ein dem ersten Verzögerungsglied (5) in Ausbreitungsrichtung (A) der elektromagnetischen Welle (4) nachgeordnetes zweites Verzögerungsglied (6) in dem Grundkörper (3) vorgesehen ist, wobei die Polarisationsachse (P₂) des zweiten Verzögerungsglieds (6) zu der Polarisationsachse (P₁) des ersten Verzögerungsglieds (5) um einen Verzögerungswinkel (β) gedreht ist.

2. Polarisator (1) nach Anspruch 1,
**dadurch gekennzeichnet, dass**
der Grundkörper (3) einen im Wesentlichen runden Querschnitt aufweist.

3. Polarisator (1) nach Anspruch 1 oder 2,
**dadurch gekennzeichnet, dass**
der Grundkörper (3) als dielektrischer Wellenleiter, Hohlleiter oder Eindraht-Wellenleiter ausgebildet ist.

4. Polarisator (1) nach einem der Ansprüche 1 bis 3,
**dadurch gekennzeichnet, dass**
das erste Verzögerungsglied (5) und/oder das zweite Verzögerungsglied (6) einen von dem Querschnitt des Grundkörpers (3) verschiedenen, vorzugsweise geringeren Querschnitt, aufweist bzw. aufweisen.

5. Polarisator (1) nach einem der Ansprüche 1 bis 4,
**dadurch gekennzeichnet, dass**
das erste Verzögerungsglied (5) und/oder das zweite Verzögerungsglied (6) einteilig mit dem Grundkörper (3) ausgebildet ist bzw. sind.

6. Polarisator (1) nach Anspruch 5,
**dadurch gekennzeichnet, dass**
das erste Verzögerungsglied (5) und/oder das zweite Verzögerungsglied (6) durch jeweils wenigstens eine Ausnehmung, vorzugsweise eine Abflachung (8), in dem Grundkörper (3) ausgebildet ist bzw. sind.

7. Polarisator (1) nach Anspruch 6,
**dadurch gekennzeichnet, dass**
das erste Verzögerungsglied (5) und/oder das zweite Verzögerungsglied (6) durch jeweils zwei entlang des Umfangs des Grundkörpers (3) gegenüberliegende Ausnehmungen (8) ausgebildet ist bzw. sind, wobei die beiden gegenüberliegenden Ausnehmungen (8) orthogonal zu der Polarisationsachse (P₁, P₂) des Verzögerungsglieds (5, 6) ausgerichtet sind.

8. Polarisator (1) nach Anspruch 6 oder 7,
**dadurch gekennzeichnet, dass**
die wenigstens eine Ausnehmung (8) entlang der Ausbreitungsrichtung (A) der elektromagnetischen Welle (4) einen ersten Übergangsbereich (B_{A}) aufweist, in dem der Querschnitt des Grundkörpers (3) abfällt, gefolgt von einem Mittelbereich (B_{B}), in dem der Querschnitt des Grundkörpers (3) konstant ist, gefolgt von einem zweiten Übergangsbereich (B_{C}), in dem der Querschnitt des Grundkörpers (3) ansteigt.

9. Polarisator (1) nach einem der Ansprüche 1 bis 8,
**dadurch gekennzeichnet, dass**
die Länge (L₁) des ersten Verzögerungsglieds (5) und die Länge (L₂) des zweiten Verzögerungsglieds (6) in Ausbreitungsrichtung (A) der elektromagnetischen Welle (4) verschieden sind.

10. Wellenleiter (2) zur Übertragung einer elektromagnetischen Welle (4), umfassend wenigstens einen Polarisator (1) nach einem der Ansprüche 1 bis 9.

11. System (9) zur Übertragung von hochfrequenten elektromagnetischen Signalen, umfassend einen Wellenleiter (2) zur Übertragung einer elektromagnetischen Welle (4) und eine erste Antennenanordnung (10) zur Einspeisung der elektromagnetischen Welle (4) in einen Grundkörper (3) eines ersten Polarisators (1), wobei der erste Polarisator (1) angeordnet und ausgebildet ist, die eingespeiste elektromagnetische Welle (4) von einer linearen Polarisation in eine zirkulare Polarisation zu überführen, wobei ein erstes Verzögerungsglied (5) in dem Grundkörper (3) des ersten Polarisators (1) vorgesehen ist, dessen Polarisationsachse (P₁) zu der Polarisationsachse (P_{L}) des von der ersten Antennenanordnung (10) in den Grundkörper (3) des ersten Polarisators (1) eingespeisten elektromagnetischen Welle (4) um einen Verzögerungswinkel (α) gedreht ist,
**dadurch gekennzeichnet, dass**
ein dem ersten Verzögerungsglied (5) in Ausbreitungsrichtung (A) der elektromagnetischen Welle (4) nachgeordnetes zweites Verzögerungsglied (6) in dem Grundkörper (3) vorgesehen ist, wobei die Polarisationsachse (P₂) des zweiten Verzögerungsglieds (6) zu der Polarisationsachse (P₁) des ersten Verzögerungsglieds (5) um einen Verzögerungswinkel (β) gedreht ist.

12. System (9) nach Anspruch 11,
**dadurch gekennzeichnet, dass**
eine zweite Antennenanordnung (11) zum Empfang der elektromagnetischen Welle (4) an einem Grundkörper (3) eines zweiten Polarisators (12) vorgesehen ist, wobei der zweite Polarisator (12) dem ersten Polarisator (1) in Ausbreitungsrichtung (A) der elektromagnetischen Welle (4) nachgeordnet und ausgebildet ist, die durch den Wellenleiter (2) übertragene elektromagnetische Welle (4) von der zirkularen Polarisation in eine lineare Polarisation zu überführen, wobei ein drittes Verzögerungsglied (13) in dem Grundkörper (3) des zweiten Polarisators (12) vorgesehen ist, dessen Polarisationsachse (P₃) zu der Polarisationsachse (P₁) des ersten Verzögerungsglieds (5) des ersten Polarisators (1) um 90° gedreht ist, und wobei ein dem dritten Verzögerungsglied (13) in Ausbreitungsrichtung (A) der elektromagnetischen Welle (4) vorgeordnetes viertes Verzögerungsglied (14) in dem Grundkörper (3) des zweiten Polarisators (12) vorgesehen ist, dessen Polarisationsachse (P₄) zu der Polarisationsachse (P₂) des zweiten Verzögerungsglieds (6) des ersten Polarisators (1) um 90° gedreht ist.

13. System (9) nach Anspruch 11 oder 12,
**dadurch gekennzeichnet, dass**
die Länge (L₁, L₂) der Verzögerungsglieder (5, 6, 13, 14) in Ausbreitungsrichtung (A) der elektromagnetischen Welle (4) in Abhängigkeit von dem Verzögerungswinkel (α, β) des jeweiligen Verzögerungsglieds (5, 6, 13, 14) bestimmt ist, wobei die Länge (L₁, L₂) der Verzögerungsglieder (5, 6, 13, 14) mit steigendem Verzögerungswinkel (α, β) abnimmt, vorzugsweise umgekehrt proportional zu dem Verzögerungswinkel (α, β) bestimmt ist.

14. System (9) nach einem der Ansprüche 11 bis 13,
**dadurch gekennzeichnet, dass**
die Summe aus dem Verzögerungswinkel (α) des ersten Verzögerungsglieds (5) und des Verzögerungswinkels (β) des zweiten Verzögerungsglieds (6) einen Gesamtverzögerungswinkel von 90° ergibt, wobei der Verzögerungswinkel (α) des ersten Verzögerungsglieds (5) 1 °bis 45°, vorzugsweise 5 ° bis 25°, besonders bevorzugt 15°, und der Verzögerungswinkel (β) des zweiten Verzögerungsglieds (6) 1 °bis 89°, vorzugsweise 65° bis 85°, besonders bevorzugt 75°, beträgt.

15. System zum Empfang von hochfrequenten elektromagnetischen Signalen, umfassend einen Wellenleiter (2) zur Übertragung einer elektromagnetischen Welle (4) und eine zweite Antennenanordnung (11) zum Empfang der elektromagnetischen Welle (4) an einem Grundkörper (3) eines zweiten Polarisators (12), wobei der zweite Polarisator (12) ausgebildet ist, die durch den Wellenleiter (2) übertragene elektromagnetische Welle (4) von einer zirkularen Polarisation in eine lineare Polarisation zu überführen, wobei ein drittes Verzögerungsglied (13) in dem Grundkörper (3) des zweiten Polarisators (12) vorgesehen ist, dessen Polarisationsachse (P₃) zu der Polarisationsachse (P_{L}) der aus dem zweiten Polarisator (12) austretenden linear polarisierten elektromagnetischen Welle (4) um einen Verzögerungswinkel (α) gedreht ist,
**dadurch gekennzeichnet, dass**
ein dem dritten Verzögerungsglied (13) in Ausbreitungsrichtung (A) der elektromagnetischen Welle (4) vorgeordnetes viertes Verzögerungsglied (14) in dem Grundkörper (3) des zweiten Polarisators (12) vorgesehen ist, wobei die Polarisationsachse (P₄) des vierten Verzögerungsglieds (14) zu der Polarisationsachse (P₃) des dritten Verzögerungsglieds (13) um einen Verzögerungswinkel (β) gedreht ist.
